# EUROPÄISCHE PATENTSCHRIFT

(11) **EP 0 799 256 B1**
(45) Veröffentlichungstag und Bekanntmachung des Hinweises auf die Patenterteilung: **04.11.1998**
(21) Anmeldenummer: 95943171.9
(22) Anmeldetag: 20.12.1995
(51) Int. Cl.: C08F 285/00, C08L 33/12, C08L 51/00

(54) **EMULSIONSPFROPFCOPOLYMERISATE**
EMULSION GRAFT COPOLYMERS
COPOLYMERES GREFFES EN EMULSION

(30) Priorität: 21.12.1994 DE 4445703; 28.06.1995 DE 19523465; 15.07.1995 DE 19525882
(43) Veröffentlichungstag der Anmeldung: 08.10.1997
(73) Patentinhaber: BASF AKTIENGESELLSCHAFT, 67056 Ludwigshafen (DE)
(72) Erfinder: ZIMMER, Guenter, D-55129 Mainz (DE); POEGEL, Josef, D-65199 Wiesbaden (DE); TIEFENSEE, Kristin, D-67368 Westheim (DE)
(86) Internationale Anmeldenummer: EP9505056
(87) Internationale Veröffentlichungsnummer: WO9619509

(56) Entgegenhaltungen:
- EP-A- 0 573 783
- US-A- 4 180 529

## Beschreibung

Die vorliegende Erfindung betrifft Emulsionspfropfcopolymerisate, die aufgebaut sind aus
A) 5 bis 18 Gew.-% einer ersten Stufe aus
   a₁) 85 bis 99 Gew.-% Methylmethacrylat
   a₂) 1 bis 15 Gew.-% Acrylsäure-C₁- bis C₈-alkylester
   a₃) 0 bis 2 Gew.-% Allylmethacrylat
   a₄) 0 bis 3 Gew.-% weiterer di- oder polyfunktioneller Comonomerer
B) 25 bis 35 Gew.-% einer zweiten Stufe aus
   b₁) 10 bis 25 Gew.-% vinylaromatischer Monomerer
   b₂) 75 bis 90 Gew.-% Acrylsäure-C₁- bis C₂₀-alkylester
   b₃) 0 bis 3 Gew.-% Allylmethacrylat
C) 30 bis 40 Gew.-% einer dritten Stufe aus
   c₁) 15 bis 27 Gew.-% vinylaromatischer Monomerer
   c₂) 73 bis 85 Gew.-% Acrylsäure-C₁- bis C₂₀-alkylester
   c₃) 0 bis 3 Gew.-% Allylmethacrylat
D) 15 bis 30 Gew.-% einer vierten Stufe aus
   d₁) 85 bis 96 Gew.-% Methylmethacrylat
   d₂) 3,8 bis 10 Gew.-% Acrylsäure-C₁- bis C₈-alkylester
   d₃) 0 bis 2 Gew.-% weiterer di- oder polyfunktioneller Comonomerer
   d₄) 0,2 bis 3 Gew.-% eines Reglers
   mit der Maßgabe, daß das Verhältnis der Mengen an vinylaromatischen Monomeren c₁:b₁ 1,3 bis 1,9:1 beträgt und die Summe der Komponenten A bis D 100 Gew.-% ergibt.

Darüber hinaus betrifft die vorliegende Erfindung ein Verfahren zur Herstellung dieser Emulsionspfropfcopolymerisate sowie deren Verwendung.

Emulsionspfropfcopolymerisate auf der Basis von Vinylmonomeren sind allgemein bekannt und finden für sich allein, besonders aber als Zusatzstoffe in Kunststoffen wie Homo- oder Copolymerisaten auf Acrylat- und Methacrylatbasis Anwendung. Ihr Zusatz bewirkt eine Verbesserung der Schlagzähigkeit derartiger Acrylatharze, die beispielsweise zu Formkörpern, Platten, Folien und organischen Gläsern (Acrylglas) verarbeitet werden können. Die anderen wichtigen Grundeigenschaften von Acrylatharzen, wie hohe Lichtdurchlässigkeit und Klarheit, Witterungsbeständigkeit, Wärmeformbeständigkeit und mechanische Festigkeit können jedoch durch diese Zusätze beeinträchtigt werden. Daher ist man allgemein bestrebt, durch Emulsionspfropfcopolymerisate mit einem mehrstufigen Aufbau und spezieller Zusammensetzung die unerwünschten Eigenschaftsveränderungen so gering wie möglich zu halten oder - wenn möglich - nicht auftreten zu lassen und dabei gleichzeitig eine Steigerung der Schlagzähigkeit zu erzielen.

Aus der DE-A 22 53 689 sind mehrstufige Emulsionspfropfcopolymerisate bekannt. Die dort näher beschriebenen Polymerisate sind dreistufig - also aus einem Kern sowie aus einer ersten und einer zweiten Pfropfhülle - aufgebaut, wobei Kern und zweite Hülle aus einem harten, nicht elastomeren Polymerisat und die erste Hülle aus einem elastomeren Polymerisat bestehen. Ferner wird in dieser Schrift auf die Möglichkeit eines mehrstufigen Aufbaus der Pfropfpolymerisate aus alternierend harten und elastomeren Phasen hingewiesen.

Darüber hinaus sind der EP-A-512 333 Emulsionspfropfcopolymerisate zu entnehmen, die aus einem harten Kern und vier Pfropfhüllen aufgebaut sind, wobei harte und weiche Stufen alternieren.

Werden die bekannten Emulsionspfropfcopolymerisate als Zusätze in thermoplastischen Kunststoffen, insbesondere Acrylatharzen wie Polymethylmethacrylat, eingesetzt, erhöhen sie zwar deren Schlagzähigkeit, jedoch weisen Kanten von Formteilen oder Beschichtungen von Formkörpern einen Gelbstich auf, der unerwünscht ist. Darüber hinaus lassen sich die bekannten Emulsionspfropfcopolymerisate nicht so hinreichend gut in den thermoplastischen Kunststoffen dispergieren, als daß der Streulichtanteil (haze) für viele Anwendungen befriedigend klein wäre.

Ein weiteres Problem stellt das sogenannte Ausmuscheln extrudierter Platten, insbesondere aus mit den bekannten Emulsionspfropfcopolymerisaten schlagzähmodifiziertem Polymethylmethacrylat, dar. Unter Ausmuscheln versteht man muschelartige Vertiefungen, die sich an den Kanten bilden, wenn die Platten für die Verarbeitung zersägt werden. Darüber hinaus splittern Spritzgußteile oder werden rissig, wenn Angüsse mechanisch entfernt werden.

Der vorliegenden Erfindung lagen daher Emulsionspfropfcopolymerisate als Schlagzähigkeitsverbesserer für thermoplastische Massen als Aufgabe zugrunde, die diesen Massen eine hohe Schlagzähigkeit verleihen und gleichzeitig die mechanischen und optischen Eigenschaften wie Kantengelbstich und haze verbessern und die Neigung zum Ausmuscheln verringern.

Demgemäß wurden die eingangs definierten Emulsionspfropfcopolymerisate gefunden. Bevorzugte Ausführungsformen sind der Beschreibung zu entnehmen.

Weiterhin wurde ein Verfahren zu deren Herstellung, deren Verwendung als Zusätze zu thermoplastischen Massen sowie Formkörper, Folien und Beschichtungen aus diesen thermoplastischen Massen gefunden.

Die erfindungsgemäßen Emulsionspfropfcopolymerisate sind vierstufig aus einer harten, nicht elastomeren Stufe (A), einer elastomeren, zweiten Stufe (B), einer elastomeren, dritten Stufe (C) und schließlich aus einer äußeren, harten, nicht elastomeren, vierten Stufe (D) aufgebaut, wobei die einzelnen Stufen in folgenden Mengen vorhanden sind:

| | |
|---|---|
| 5 bis 18 Gew.-%, | bevorzugt 10 bis 16 Gew.-% einer ersten Stufe (A), |
| 25 bis 35 Gew.-%, | bevorzugt 28 bis 33 Gew.-% einer zweiten Stufe (B), |
| 30 bis 40 Gew.-%, | bevorzugt 32 bis 36 Gew.-% einer dritten Stufe (C) und |
| 15 bis 30 Gew.-%, | bevorzugt 18 bis 26 Gew.-% einer vierten Stufe (D) |

mit der Maßgabe, daß die Stufen A bis D 100 Gew.-%, ergeben.

Die erste Stufe A-des Emulsionspfropfcopolymerisates besteht aus

| | |
|---|---|
| 85 bis 99 Gew.-%, | bevorzugt 90 bis 98 Gew.-% Methylmethacrylat (a₁), |
| 1 bis 15 Gew.-%, | bevorzugt 3 bis 10 Gew.-% Acrylsäure-C₁- bis C₈-alkylester (a₂), |
| 0 bis 2 Gew.-% | bevorzugt 0,2 bis 1,2 Gew.-% Allylmethacrylat (a₃) und |
| 0 bis 3 Gew.-%, | bevorzugt 0,1 bis 0,5 Gew.-% weiterer di- oder polyfunktionellen Comonomerer (a₄). |

Die Summe der Komponenten a₁ bis a₄ ergibt 100 Gew.-%.

Als Acrylsäure-C₁- bis C₈-alkylester a₂ kommen sowohl lineare als auch verzweigtkettige Alkylester der Acrylsäure in Betracht. Zu den bevorzugten Acrylsäure-C₁- bis C₈-alkylestern zählen Acrylsäuremethylester, Acrylsäureethylester, Acrylsäure-n-propylester, Acrylsäure-i-propylester, Acrylsäure-n-butylester, Acrylsäure-i-butylester und Acrylsäure-t-butylester. Darunter wird Acrylsäuremethylester und Acrylsäureethylester besonders bevorzugt. Es können auch Mischungen unterschiedlicher Acrylsäure-C₁- bis C₈-alkylester eingesetzt werden.

Als di- oder polyfunktionelle Comonomere (a₄) seien

Alkylenglycoldiacrylate wie Ethylenglycoldiacrylat, Propylenglycoldiacrylat, 1,3-Butylenglycoldiacrylat und 1,4 -Butylenglycoldiacrylat,

Alkylenglycoldimethacrylate wie Ethylenglycoldimethacrylat, Propylenglycoldimethacrylat, 1,3-Butylenglycoldimethacrylat und 1,4-Butylenglycoldimethacrylat,

Acrylate und Methacrylate von Glycerin, Trimethylolpropan, Pentaerythrit, Inosit und ähnliche Zuckeralkohole,

Acryl- und Methacrylamide von Ethylendiamin und andere aliphatische Di- und Polyamine,

Triacryl- und Trimethacrylamide,

Triallylcyanurat und Triallylisocyanurat sowie

Vinylbenzole wie Divinylbenzol und Trivinylbenzol genannt.

Es können auch Mischungen unterschiedlicher Comonomerer a₄ eingesetzt werden.

Die Comonomeren (a₄) dienen als Vernetzungsmittel. Sie werden aufgrund ihrer Eigenschaft, sich gleichmäßig in die polymere Phase einzubauen, auch als "Polymerisationsvernetzer" bezeichnet. Während der Polymerisationsreaktion ist die Geschwindigkeit ihres Verbrauchs im wesentlichen vergleichbar mit derjenigen des Hauptmonomeren, wodurch eine Vernetzung innerhalb der Phase zustande kommt.

Die Comonomeren (a₄) können bis zu 3 Gew.-% in der ersten Stufe enthalten sein, vorzugsweise verwendet man sie jedoch nicht mit oder nur in Mengen von 0,1 bis 0,5 Gew.-%.

Als pfropfaktives Comonomeres ist Allylmethacrylat (a₃) mit 0 bis 2 Gew.-% am Aufbau der ersten Stufe beteiligt, wobei sich die Menge nach der gewünschten Größe der ersten Stufe richtet. Bei einer bevorzugten Größe von 50 bis 200 nm beträgt der Anteil an Allylmethacrylat 0,2 bis 1,5 Gew.-%.

Pfropfaktive Comonomere sorgen für eine äußere Vernetzung und bewirken beim Aufbau eines Emulsionspfropfcopolymerisates beispielsweise die Verknüpfung der ersten Stufe (Kernphase) mit der nachfolgenden Polymerisationsstufe (Pfropfhülle). Pfropfvernetzer wie Allylmethacrylat zeigen dieses Verhalten, weil eine polymerisierbare Droppelbindung (Doppelbindung des Säureteils) mit vergleichbarer Geschwindigkeit wie das Hauptmonomere (Methylmethacrylat) polymerisiert. Dagegen reagiert die Doppelbindung der Allylgruppe mit einer deutlich niedrigeren Polymerisationsgeschwindigkeit, so daß am Ende der Polymerisation einige dieser Doppelbindungen unverändert in der Kernphase erhalten bleiben, wodurch eine Pfropfvernetzung zwischen zwei Phasen möglich ist.

Die erste Stufe A hat im allgemeinen eine Glasübergangstemperatur von mehr als 50°C, die vorzugsweise im Bereich von 80 bis 130°C liegt.

In einer zweiten Stufe B wird in Gegenwart des Emulsionspolymerisates der ersten Stufe auch "Kernlatex" oder "Saatlatex" genannt, ein Monomerengemisch aus

| | |
|---|---|
| 10 bis 25 Gew.-%, | bevorzugt 10 bis 20 Gew.-% eines vinylaromatischen Monomeren (b₁) |
| 75 bis 90 Gew.-%, | bevorzugt 78 bis 88 Gew.-% eines Acrylsäure-C₁-C₂₀-alkylesters (b₂), |
| 0 bis 3 Gew.-%, | bevorzugt 0,5 bis 2 Gew.-% Allylmethacrylat (b₃) |

polymerisiert. Die Summe der Komponenten b₁ bis b₃ ergibt 100 Gew.-%.

Als vinylaromatische Monomere (b₁) eignen sich Styrol, α-Methylstyrol, t-Butylstyrol, Monochlorstyrol, Vinyltoluol und Acryl- und Methacrylsäurephenylester.

Die vinylaromatischen Monomeren (b₁), insbesondere Styrol, sind von besonderer Bedeutung, da sie den Brechungsindex erhöhen. Auf diese Weise läßt er sich an denjenigen der ersten Stufe sowie der nachfolgenden Stufen angleichen. Darüber hinaus kann der Brechungsindex durch die vinylaromatischen Monomeren des Emulsionspfropfcopolymerisates auch mit demjenigen der thermoplastischen Masse abgestimmt werden.

Unter den Acrylsäure-C₁-C₂₀-alkylestern (b₂) sind die C₂-C₁₀-Alkylester bevorzugt. Es können sowohl linearkettige als auch verzweigte Alkylester der Acrylsäure eingesetzt werden. Besonders bevorzugt werden Acrylsäure-n-butylester und Acrylsäure-(2-ethyl)hexylester. Es können auch Mischungen unterschiedlicher Acrylsäureester (b₂) verwendet werden.

Ferner sind im Monomerengemisch der zweiten Stufe 0 bis 3 Gew.-%, bevorzugt 0,5 bis 2 Gew.-% des Pfropfvernetzers Allylmethacrylat (b₃) enthalten.

Die Glasübergangstemperatur der Stufe B liegt im allgemeinen unter 0°C, bevorzugt im Bereich von -10 bis -40°C.

Die dritte Stufe ist wie die zweite Stufe elastomerisch und besteht aus

| | |
|---|---|
| 15 bis 27 Gew.-%, | bevorzugt 17 bis 25 Gew.-% vinylaromatischer Monomerer c₁, |
| 73 bis 85 Gew.-%, | bevorzugt 73 bis 80 Gew.-% Acrylsäure-C₁- bis C₂₀-alkylester c₂ und |
| 0 bis 3 Gew.-%, | bevorzugt 0,5 bis 2 Gew.-% Allylmethacrylat c₃. |

Die Summe der Komponenten c₁ bis c₃ ergibt 100 Gew.-%.

Es werden Monomeren verwendet, wie sie auch in der zweiten Stufe angegeben sind. Die Monomeren der dritten Stufe brauchen nicht mit denen der zweiten Stufe identisch zu sein. Bevorzugt werden jedoch die gleichen Monomeren wie in der zweiten Stufe eingesetzt. Die dritte Stufe unterscheidet sich jedoch von der zweiten Stufe in der quantitativen Zusammensetzung des Monomerengemisches. Die Menge an vinylaromatischen Monomeren c₁ beträgt erfindungsgemäß das 1,3 bis 1,9-fache der Menge an vinylaromatischen Monomeren b₁.

Die Glasübergangstemperatur der Stufe C liegt in der Regel unter 0°C, vorzugsweise im Bereich von -10 bis -40°C.

In der vierten Stufe D wird in Gegenwart des bereits gebildeten Latex aus den Stufen A bis C ein Monomerengemisch zu einer äußeren harten vierten Stufe D polymerisiert. Der Anteil dieser Stufe - auch äußere Hartphase genannt - an der Gesamtmenge des Emulsionpfropfcopolymerisates beträgt von 15 bis 30 Gew.-%, bevorzugt von 18 bis 26 Gew.-% und besteht aus

| | |
|---|---|
| 85 bis 96 Gew.-%, | bevorzugt 90 bis 96 Gew.-% Methylmethacrylat d₁, |
| 3,8 bis 10 Gew.-%, | bevorzugt 4 bis 8 Gew.-% Acrylsäure-C₁- bis C₈-alkylester d₁, |
| 0 bis 2 Gew.-%, | bevorzugt 0 bis 1 Gew.-% di- oder polyfunktioneller Comonomerer d₃ und |
| 0,2 bis 3 Gew.-%, | bevorzugt 0,5 bis 3 Gew.-% eines Reglers d₄, |

wobei unter d₂ und d₃ die gleichen Monomeren zu verstehen sind wie sie in der ersten Stufe angegeben wurden. Die Monomeren d₂ und d₃ können sich von a₂ und a₄ unterscheiden. Bevorzugt werden jedoch die selben Monomeren eingesetzt. Die Summe der Komponenten d₁ bis d₄ ergibt 100 Gew.-%.

Als Regler (d₄) sind einwertige Alkylmerkaptane wie s-Butylmerkaptan, n-Dodecylmerkaptan und t-Dodecylmerkaptan geeignet. Besonders geeignet ist n-Dodecylmerkaptan.

Die Mitverwendung eines Reglers ist von besonderer Bedeutung, da er die Kettenlänge bei der Polymerisation der Endphase begrenzt. Auf diese Weise kann das Molekulargewicht der äußeren Hartphase D demjenigen der thermoplastischen Masse angepaßt werden, was besonders bei der Abmischung der Emulsionspfropfcopolymerisate mit thermoplastischen Massen von Vorteil ist.

Die Glasübergangstemperatur der vierten Stufe D ist größer als 50°C, bevorzugt sind 80 bis 130°C.

Die erfindungsgemäßen Emulsionspfropfcopolymerisate lassen sich in an sich bekannter Weise nach der Methodik der Emulsionspfropfpolymerisation, die auch als Saatlatex-Verfahren bezeichnet wird, herstellen, wobei die Latexteilchen bis zum Abschluß der Endstufe im emulgierten Zustand verbleiben.

Durch das polymere Produkt im Saat latex wird der Gesamtgehalt an Teilchen im vierstufigen Endprodukt festgelegt. Das bedeutet, daß nach der ersten Polymerisationsstufe weitere Teilchen im wesentlichen nicht neu gebildet werden und der Teilchengehalt annähernd konstant bleibt.

Durch Verwendung von Emulgatoren läßt sich die Teilchengröße sowohl der ersten Stufe als auch der Latexteilchen in den darauf folgenden Stufen festlegen, wobei Emulgatorart und -konzentration bestimmend sind.

Es können ionogene und nicht ionogene Emulgatoren verwendet werden.

Geeignete Emulgatoren sind beispielsweise Dioctylnatriumsulfosuccinat, Natriumlaurylsulfat, Natriumdodecylbenzolsulfonat, Alkylphenoxypolyethylensulfonate und Salze von langkettigen Carbon- und Sulfonsäuren.

Als nichtionogene Emulgatoren sind beispielsweise Fettalkoholpolyglykolether, Alkylarylpolyglykolether, Fettsäuremonoethanolamide sowie ethoxylierte Fettsäureamide und -amine geeignet.

Bezogen auf das Gesamtgewicht des Emulsionspfropfcopolymerisates liegt die Gesamtemulgatormenge vorzugsweise bei 0,05 bis 5 Gew.-%.

Der Durchmesser der fertigen Emulsionspolymerisatteilchen wird in an sich bekannter Weise bei 100 bis 400 nm, beispielsweise bei 250 bis 400 nm, bevorzugt bei 300 bis 350 nm eingestellt. In einer weiteren bevorzugten Ausführungsform liegt er im Bereich von 150 bis 300 nm.

Als Polymerisationsinitiatoren können Ammonium- und Alkaliperoxodisulfate wie Kaliumperoxodisulfat sowie Initiatorkombinationssysteme wie Natriumpersulfat, Natriumhydrosulfit, Kaliumpersulfat, Natriumformaldehydsulfoxylat und Kaliumperoxodisulfat, Natriumdithionit-Eisen-II-sulfat verwendet werden, wobei die Polymerisationstemperatur im Fall der thermisch zu aktivierenden Ammonium- und Alkaliperoxodisulfate bei 50 bis 100°C und bei den Initiatorkombinationen, die als Redoxsysteme wirksam sind, darunter liegen kann, etwa im Bereich von 20 bis 50°C.

Die gesamte Initiatormenge liegt vorzugsweise zwischen 0,02 und 0,5 Gew.-%, bezogen auf das fertige Emulsionspolymerisat.

Neben dem Molmassenregler, der bei der Polymerisation der äußeren harten Stufe (D) verwendet wird, kann die Polymerisation der ersten und übrigen Stufen ebenfalls in Gegenwart eines Reglers durchgeführt werden. Die Gesamtreglermenge liegt im allgemeinen zwischen 0,01 und 1 Gew.-%, bezogen auf das Gesamtgewicht des Polymerisates.

Im allgemeinen empfiehlt es sich, den pH-Wert konstant zu halten weswegen die Mitverwendung eines Puffers zweckmäßig ist. Üblich sind Salze der Phosphorsäure z.B. Mischungen von Kaliumdihydrogenphosphat und Dinatriumhydrogenphosphat; es können auch ammoniakalische Lösungen verwendet werden.

Nach dem erfindungsgemäßen Verfahren liegt die Komponente C gegenüber der Komponente 3 stets im Überschuß vor, d.h. der Anteil des Monomerengemisches C ist stets höher wie der des Monomergemisches 3. Weiterhin ist nach dem erfindungsgemäßen Verfahren dafür Sorge zu tragen, daß das Verhältnis der Mengen an vinylaromanischen Monomeren c₁ zu b₁ im Bereich von 1,3:1 bis 2,0:1, insbesondere im Bereich von 1,4 :1 bis 1,9:1 liegt. Dies geschieht vorzugsweise dadurch, daß man zunächst durch Zufuhr des entsprechenden Monomergemisches B die elastomere Stufe B dem Kern A aufpolymerisiert und danach durch Zufuhr des Monomergemisches C der elastomeren Schale B eine weitere elastomere Schale C hinzupolymerisiert.

Die Polymerisation kann bei einer Temperatur im Bereich zwischen 70 und 100°C durchgeführt werden, wobei eine Temperatur von 85 bis 95°C bevorzugt ist. Bei Temperaturen unter 70°C verlängern sich die Polymerisationszeiten, bei Temperaturen über 100°C ist es erforderlich, die Polymerisation unter Druck durchzuführen.

Im übrigen wird das erfindungsgemäße Emulsionspfropfcopolymerisat so hergestellt, daß man eine wäßrige Mischung, bestehend aus Monomeren, Vernetzer, Emulgator, Initiator, Regler und einem Puffersystem in einem mit Stickstoff inertisierten Reaktor vorlegt, in der Kälte unter Rühren inertisiert und dann für etwa 15 bis 120 Minuten auf die Polymerisationstemperatur bringt. Auf diese Weise wird zunächst durch Emulgierung und Polymerisation des Kernmonomerengemisches der Kernlatex A gebildet.

Gegebenenfalls nach einer Nachreaktionszeit von 15 bis 120 Minuten werden die Stufe B und C unter Zulauf der Monomeren in Gegenwart der bereits gebildeten Stufe A durch Emulsionspolymerisation erzeugt. Anschließend, eventuell ebenfalls nach einer Nachreaktionszeit, wird die äußere Hartphase D durch Emulsionspolymerisation der entsprechenden Monomeren gebildet. Dabei kann es jeweils zweckmäßig sein, die Monomeren vor dem Zulauf unter Rühren im wäßrigen Medium zu emulgieren.

Die Isolierung des Emulsionspfropfcopolymerisates aus dem erhaltenen Latex erfolgt auf bekannte Weise durch Ausfällung, Filtration und anschließender Trocknung. Für die Ausfällung können beispielsweise wäßrige Lösungen von anorganischen Salzen wie Natriumchlorid, Natriumsulfat, Magnesiumsulfat und Calciumchlorid, wäßrige Lösungen von Salzen der Ameisensäure wie Magnesiumformiat, Calciumformiat und Zinkformiat, wäßrige Lösungen von anorganischen Säuren wie Schwefel- und Phosphorsäure sowie wäßrige ammoniakalische und aminische Lösungen sowie andere wäßrige alkalische Lösungen, z.B. von Natrium- und Kaliumhydroxid verwendet werden.

Die Trocknung kann beispielsweise durch Gefrier-, Sprüh-, Wirbelschicht- und Umlufttrocknung erfolgen.

Das getrocknete Emulsionspfropfcopolymerisat kann dann in Extrudern mit Acrylatharzen zu schlagzähen thermoplastischen Massen verarbeitet werden.

Ferner können Koagulation und Entwässerung des Latex direkt im Extruder erfolgen. Zur Herstellung der thermoplastischen Massen kann man den Latex auch unmittelbar im Extruder mit dem Basisharz vermischen.

Nicht nur durch Extrusion, sondern auch durch andere Verarbeitungsverfahren wie Kalandrieren und Spritzgießen können die erfindungsgemäßen Emulsionspfropfcopolymerisate entweder allein oder unter Abmischung mit Acrylatharzen, insbesondere Polymethylmethacrylat zu schlagzähen Formkörpern wie Platten, Folien und Beschichtungen verarbeitet werden. Darüber hinaus können auch andere Zusatzstoffe wie Antioxidantien, Lichtstabilisatoren, thermische Stabilisatoren, Schmiermittel, Farbstoffe und Füllstoffe mitverarbeitet werden.

Die erfindungsgemäßen Emulsionspfropfcopolymerisate werden vorzugsweise als Zusatzmittel zur Verbesserung der Schlagzähigkeit von thermoplastischen Massen auf Basis von Acrylatharzen verwendet. Derartige Acrylatharze sind im wesentlichen aus Methylmethacrylat sowie bis zu 50 Gew.-% aus weiteren Comonomeren aufgebaut. In der Hauptsache handelt es sich um monofunktionelle Monomere wie Acrylsäure-C₁-C₈-alkylester und Methacrylsäure-C₂-C₈-alkylester. Besonders bevorzugt werden Polymerisate, die 80 bis 99 Gew.-% Methylmethacrylat, 1 bis 20 Gew.-% Acrylsäure-C₁-C₈-alkylester, bevorzugt Acrylsäuremethylester, oder Acrylsäureethylester und 0 bis 15 Gew.-% weiterer Comonomerer enthalten.

Bevorzugte thermoplastische Massen enthalten
I) 10 bis 60 Gew.-% Emulsionspfropfcopolymerisate gemäß Anspruch 1 und
II) 40 bis 90 Gew.-% eines Polymerisates, enthaltend
   II₁) 80 bis 99 Gew.-% Methylmethacrylat
   II₂) 1 bis 20 Gew.-% Acrylsäure-C₁- bis C₈-alkylester
   II₃) 0 bis 15 Gew.-% weiterer Comonomerer
III) 0 bis 20 Gew.-% Zusatzstoffe oder Verarbeitungshilfsmittel oder deren Mischungen.

Besonders bevorzugt werden thermoplastische Massen, die 30 bis 45 Gew.-% Emulsionspfropfcopolymerisate enthalten und 55 bis 70 Gew.-% Polymerisate II.

Neben einem gegenüber dem Stand der Technik verbesserten Zäh-Steifverhältnis zeigen Formkörper aus den erfindungsgemäßen thermoplastischen Massen bei Sägenacharbeiten eine deutlich geringere Tendenz zum Ausmuscheln; Spritzgußteile weisen nach dem Entfernen der Angüsse eine glatte Restfläche auf. Gegenüber Formteilen aus bekannten thermoplastischen Massen ist der Kantengelbstich von Formteilen aus den erfindungsgemäßen Massen deutlich verringert. Ebenso verhält es sich mit dem Streulichtanteil (haze).

### Beispiele

Folgende Abkürzungen werden verwendet:

| | |
|---|---|
| MMA | Methylmethacrylat |
| MA | Methylacrylat |
| ALMA | Allylmethacrylat |
| BA | Butylacrylat |
| S | Styrol |
| n-DCM | N-Dodecylmercaptan |

### Herstellung der Emulsionspfropfcopolymerisate

### Vergleichsbeispiel A

In einem Druckreaktor mit einem Volumen von 800 1 wurden 96 Gew.-Teile Wasser, 0,34 Gew.-Teile Dioctylnatriumsulfosuccinat und 0,05 Gew.-Teile Kaliumperoxodisulfat zusammen mit 19 Gew.-Teilen MMA, 0,85 Gew.-Teilen MA und 0,09 Gew.-Teilen ALMA vorgelegt und bei 90°C 30 Minuten lang polymerisiert. Auf diese Weise erhielt man einen Kern A.

Anschließend wurden zu dieser Emulsion 72 Gew.-Teile BA, 15,8 Gew.-Teile Styrol und 1,8 Gew.-Teile ALMA zusammen mit 0,11 Gew.-Teilen Kaliumperoxodisulfat hinzugefügt und bei 90°C 1 Stunde lang polymerisiert. Es bildete sich eine Stufe B.

Danach fügte man noch 27 Gew.-Teile MMA, 1,3 Gew.-Teile MA, 0,18 Gew.-Teile nDCM und 0,02 Gew.-Teile Kaliumperoxodisulfat hinzu und polymerisierte bei 90°C 1 Stunde lang bis zu einem Umsatz von 98 %. Es resultierte eine weitere Schale C.

### Beispiel 1

Analog dem Vergleichsbeispiel A wurde ein Kern A hergestellt.

Anschließend fügte man der erhaltenen Emulsion bei 90°C 72 Gew.-Teile BA, 15,8 Gew.-Teile Styrol, 1,8 Gew.-Teile ALMA und 0,11 Gew.-Teile Kaliumperoxodisulfat im Laufe von 2 Stunden hinzu. Die Zugabe des Monomerengemisches erfolgte dabei in der Weise, daß zunächst 1 Stunde lang insgesamt 46 Gew.-% der gesamten Monomermenge der Stufen B und C polymerisiert wurde, wobei dieser Zulauf 35 Gew.-% des gesamten Styrols enthielt. Es bildete sich somit die Stufe B.

Danach wurden 54 Gew.-% der gesamten Monomermenge B und C bei 90°C 1 Stunde lang polymerisiert, wobei der Zulauf jetzt 65 Gew.-% des gesamten Styrols enthielt. Es resultierte die styrolreichere Stufe C.

Abschließend fügte man noch 27 Gew.-Teile MMA, 1,3 Gew.-Teile MA, 0,18 Gew.-Teile nDCM und 0,02 Gew.-Teile Kaliumperoxodisulfat hinzu und polymerisierte bei 90°C 1 Stunde bis zu einem Umsatz von mindestens 98 %. Auf diese Weise konnte man die Schale D herstellen.

### Beispiel 2

Analog dem erfindungsgemäßen Beispiel 1 wurde ein Emulsionspfropfcopolymerisat mit den Schalen A, B, C und D hergestellt, wobei aber die Zufuhr der Monomergemische B und C so ausgestaltet wurde, daß zunächst 1 Stunde insgesamt 49 Gew.-% der gesamten Monomermenge der Stufen B und C polymerisiert wurde und dieser erste Zulauf 40 Gew.-% des gesamten Styrols enthielt. Anschließend polymerisierte man 51 Gew.-% der gesamten Monomermenge der Stufen B und C, wobei dieser zweite Zulauf jetzt 60 Gew.-% des gesamten Styrols enthielt.

### Vergleichsbeispiel B

Es wurde analog dem erfindungsgemäßen Beispiel 2 ein Emulsionspfropfcopolymerisat mit den Schalen A, B, C und D hergestellt, wobei aber die Zufuhr der Monomergemische B und C so geändert wurde, daß der erste Zulauf 47 Gew.-% der gesamten Monomermenge B und C und 32 Gew.-% des gesamten Styrols enthielt. Entsprechend dazu wies der zweite Zulauf 53 Gew.-% der gesamten Monomermenge B und C und 68 Gew.-% des gesamten Styrols auf.

### Vergleichsbeispiel C

Es wurde analog dem erfindungsgemäßen Beispiel 2 ein Emulsionspfropfcopolymerisat mit den Schalen A, B, C und D hergestellt, wobei aber die Zufuhr der Monomergemische B und C so geändert wurde, daß der erste Zulauf 50 Gew.-% der gesamten Monomermenge B und C und 45 Gew.-% des gesamten Styrols enthielt. Entsprechend dazu wies der zweite Zulauf ebenfalls 50 Gew.-% der gesamten Monomermenge B und C und 55 Gew.-% des gesamten Styrols auf.

### Anwendungstechnische Prüfungen

Folgende Eigenschaften wurden bestimmt:
- Schlagzähigkeit a_{N} nach DIN 53 453
- Lichtdurchlässigkeit τ nach DIN 5036 (6 mm)
- Trübung (haze) nach DIN 5036 (6 mm)
- Gelbindex YI nach ASTM-D 1925
- Elastizitätsmodul, E-Modul nach DIN 53457-3
- Ausmuscheln
- Splittern.

Die Prüfung der Schlagzähigkeit a_{N} erfolgte nach dem Charpy-Verfahren. Bei diesem Prüfungsverfahren wird ein auf zwei Stützen ruhender normierter Probekörper durch Auftreffen eines in seine Mitte zielenden Aufschlags zerstört oder geschädigt. Die für die Zerstörung bzw. Schädigung benötigte Arbeit (kJ) wird auf den kritischen Querschnitt (m²) bezogen und als Schlagzähigkeit a_{N} (Dimension kJ/m²) bezeichnet.

Als Lichtdurchlässigkeit oder Transmission τ (Dimension %) bezeichnet man das Verhältnis des von einer Probe durchgelassenen Lichtes zur Intensität des einfallenden Lichtes. Sie wurde in Abtängigkeit von der Wellenlänge in einem Bereich von 400 bis 900 nm an einem Probekörper mit einer Dicke von 6 mm bestimmt.

Durchsichtige Kunststoffe, bei denen die optische Klarheit für den Gebrauchswert wesentlich ist, werden auf ihre Trübung (haze) untersucht. Als Trübung oder Streulichtanteil (haze) (Dimension %) bezeichnet man den Teil des von einer Materialprobe durchgelassenen Lichtes, der von der Richtung des auf die Probe einfallenden Lichtstrahls aufgrund einer im Material stattfindenden Streuung abweicht. Die Trübung wurde an einem Probekörper mit einer Dicke von 6 mm bestimmt.

Der Gelbindex oder Yellownessindex YI wird dadurch gemessen, basiert auf Farbmaßzahlen, die aus dem Transmissionsspektrum gemäß DIN 5036 berechnet werden. Dabei wird die Lichtart D65 und der Großfeldnormalbeobachter zugrundegelegt.

Das Elastizitätsmodul E-Modul wurde durch Ausüben eines Zuges auf einen normierten Prüfkörper bei einer normierten Abzugsgeschwindigkeit nach DIN 53457-3 ermittelt. Der E-Modul wurde aus der Neigung der Tangente am Ursprung der Zug-Spannungskurve bestimmt.

Die Zusammensetzung der Emulsionspfropfcopolymerisate und die Ergebnisse der einzelnen anwendungstechnischen Prüfungen sind der Tabelle 1 zu entnehmen. Die Zusammensetzungen wurden so gewählt, daß in allen Beispielen jeweils der Gehalt an elastomeren Stufen gleich ist. Die Ergebnisse der Prüfungen zeigen, daß die erfindungsgemäßen Emulsionspfropfcopolymerisate in ihren mechanischen, thermischen und optischen Eigenschaften den aus dem Stand der Technik bekannten Emulsionspolymerisaten überlegen sind.

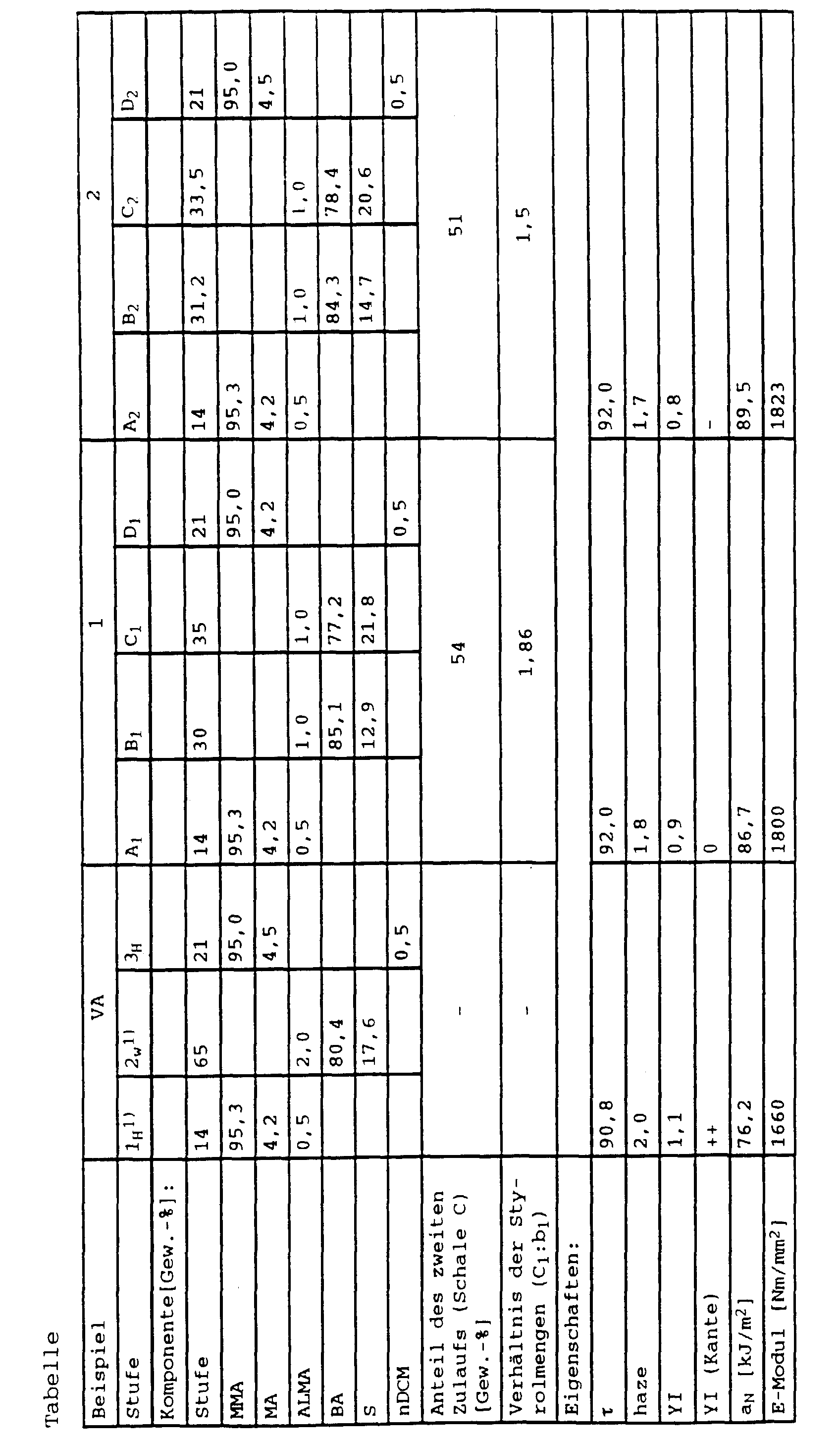

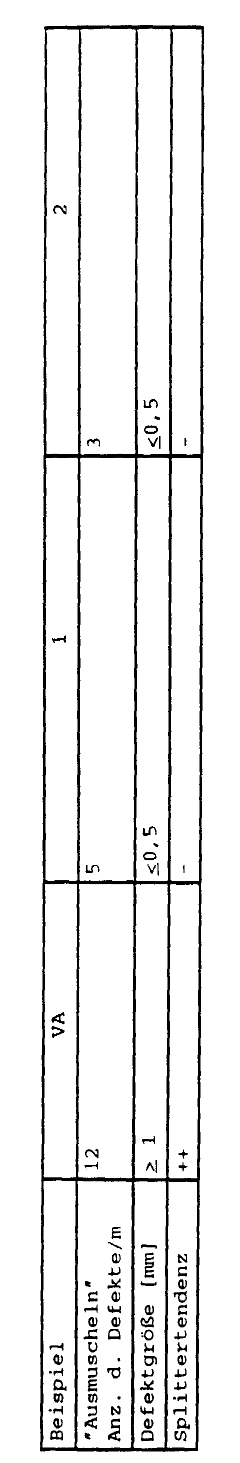

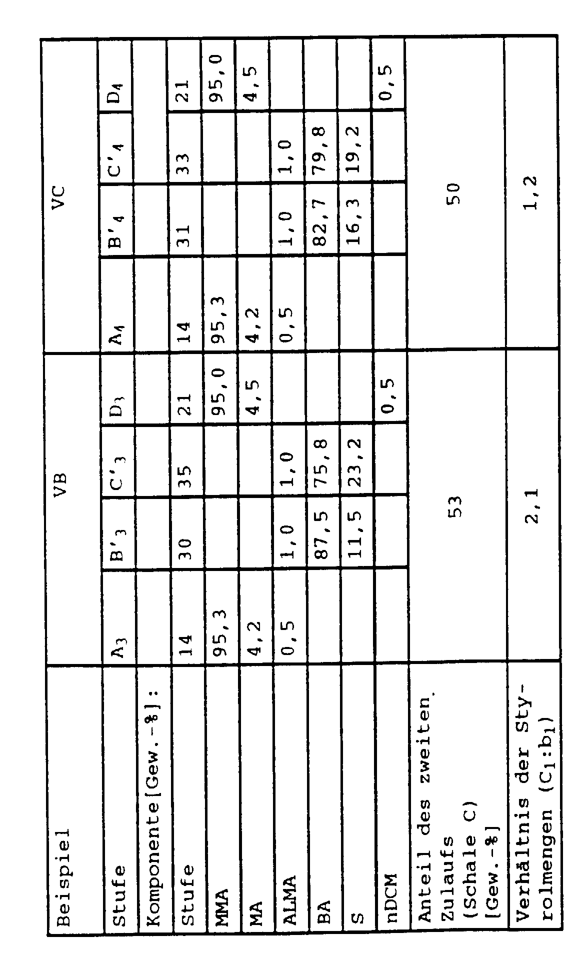

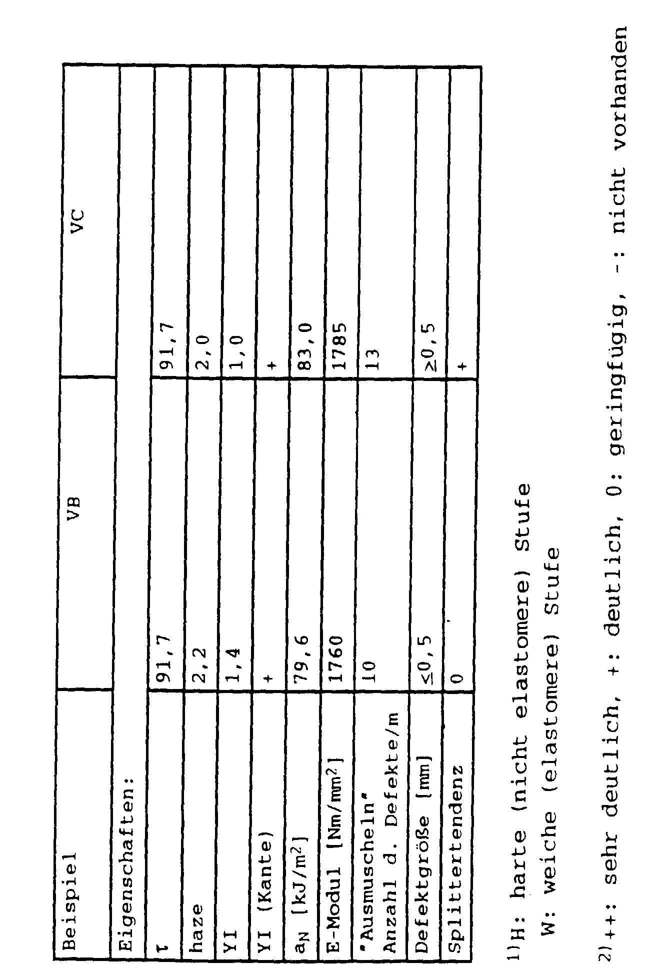

## Patentansprüche

1. Emulsionspfropfcopolymerisate aufgebaut aus
A) 5 bis 18 Gew.-% einer ersten Stufe aus
a₁) 85 bis 99 Gew.-% Methylmethacrylat
a₂) 1 bis 15 Gew.-% Acrylsäure-C₁- bis C₈-alkylester
a₃) 0 bis 2 Gew.-% Allylmethacrylat
a₄) 0 bis 3 Gew.-% weiterer di- oder polyfunktioneller Comonomerer
B) 25 bis 35 Gew.-% einer zweiten Stufe aus
b₁) 10 bis 25 Gew.-% vinylaromatischer Monomerer
b₂) 75 bis 90 Gew.-% Acrylsäure-C₁- bis C₂₀-alkylester
b₃) 0 bis 3 Gew.-% Allylmethacrylat
C) 30 bis 40 Gew.-% einer dritten Stufe aus
c₁) 15 bis 27 Gew.-% vinylaromatischer Monomerer
c₂) 73 bis 85 Gew.-% Acrylsäure-C₁- bis C₂₀-alkylester
c₃) 0 bis 3 Gew.-% Allylmethacrylat
D) 15 bis 30 Gew.-% einer vierten Stufe aus
d₁) 85 bis 96 Gew.-% Methylmethacrylat
d₂) 3,8 bis 10 Gew.-% Acrylsäure-C₁- bis C₈-alkylester
d₃) 0 bis 2 Gew.-% weiterer di- oder polyfunktioneller Comonomerer
d₄) 0,2 bis 3 Gew.-% eines Reglers
mit der Maßgabe, daß das Verhältnis der Mengen an vinylaromatischen Monomeren c₁:b₁ 1,3 bis 1,9:1 beträgt und die Summe der Komponenten A bis D 100 Gew.-% ergibt.

2. Verfahren zur Herstellung von Emulsionspfropfcopolymerisaten, dadurch gekennzeichnet, daß man
A) 5 bis 18 Gew.-% eines Monomerengemisches aus
a₁) 85 bis 99 Gew.-% Methylmethacrylat
a₂) 1 bis 15 Gew.-% Acrylsäure-C₁- bis C₈-alkylester
a₃) 0 bis 2 Gew.-% Allylmethacrylat
a₄) 0 bis 3 Gew.-% weiterer di- oder polyfunktioneller Comonomerer
B) 25 bis 85 Gew.-% eines Monomerengemisches aus
b₁) 10 bis 25 Gew.-% vinylaromatischer Monomerer
b₂) 75 bis 90 Gew.-% Acrylsäure-C₁- bis C₂₀-alkylester
b₃) 0 bis 3 Gew.-% Allylmethacrylat
C) 30 bis 40 Gew.-% eines Monomerengemisches aus
c₁) 15 bis 27 Gew.-% vinylaromatischer Monomerer
c₂) 73 bis 85 Gew.-% Acrylsäure-C₁- bis C₂₀-alkylester
c₃) 0 bis 3 Gew.-% Allylmethacrylat
D) 15 bis 30 Gew.-% eines Monomerengemisches aus
d₁) 85 bis 96 Gew.-% Methylmethacrylat
d₂) 3,8 bis 10 Gew.-% Acrylsäure-C₁- bis C₈-alkylester
d₃) 0 bis 2 Gew.-% weiterer di- oder polyfunktioneller Comonomerer
d₄) 0,2 bis 3 Gew.-% eines Reglers
nacheinander der Polymerisation zuführt, dadurch gekennzeichnet, daß die Summe der Komponenten A bis D 100 Gew.-% ergibt und die Komponente C gegenüber der Komponente B stets im Überschuß vorliegt und das Verhältnis der Mengen an vinylaromatischen Monomeren c₁:b₁ 1,3 bis 2,0:1 beträgt.

3. Verfahren nach Anspruch 2, dadurch gekennzeichnet, daß das Verhältnis der Mengen an vinylaromatischen Monomeren c₁ zu b₁ im Bereich von 1,4:1 bis 1,9:1 liegt.

4. Verwendung der Emulsionspfropfcopolymerisate gemäß Anspruch 1 als Zusatz zur Erhöhung der Schlagzähigkeit von thermoplastischen Massen.

5. Thermoplastische Massen, enthaltend 10 bis 60 Gew.-% Emulsionspfropfcopolymerisate gemäß Anspruch 1.

6. Thermoplastische Massen nach Anspruch 5, enthaltend
I) 10 bis 60 Gew.% Emulsionpfropfcopolymerisate gemäß Anspruch 1 und
II) 40 bis 90 Gew.-% eines Polymerisates, enthaltend
II₁) 80 bis 99 Gew.-% Methylmethacrylat
II₂) 1 bis 20 Gew.-% Acrylsäure-C₁- bis C₈-alkylester
II₃) 0 bis 20 Gew.-% weiterer Comonomerer
III) 0 bis 20 Gew.-% Zusatzstoffe oder Verarbeitungshilfsmittel oder deren Mischungen.

7. Formkörper, Folien oder Beschichtungen, enthaltend thermoplastische Massen gemäß Anspruch 5 oder 6.

## Claims

1. An emulsion graft copolymer composed of
A) from 5 to 18% by weight of a first stage comprising
a₁) from 85 to 99% by weight of methyl methacrylate,
a₂) from 1 to 15% by weight of C₁-C₈-alkyl acrylate,
a₃) from 0 to 2% by weight of allyl methacrylate and
a₄) from 0 to 3% by weight of further di- or polyfunctional comonomers,
B) from 25 to 35% by weight of a second stage comprising
b₁) from 10 to 25% by weight of vinylaromatic monomers,
b₂) from 75 to 90% by weight of C₁-C₂₀-alkyl acrylate and
b₃) from 0 to 3% by weight of allyl methacrylate,
C) from 30 to 40% by weight of a third stage comprising
c₁) from 15 to 27% by weight of vinylaromatic monomers,
c₂) from 73 to 85% by weight of C₁-C₂₀-alkyl acrylate and
c₃) from 0 to 3% by weight of allyl methacrylate and
D) from 15 to 30% by weight of a fourth stage comprising
d₁) from 85 to 96% by weight of methyl methacrylate,
d₂) from 3.8 to 10% by weight of C₁-C₈-alkyl acrylate,
d₃) from 0 to 2% by weight of further di- or polyfunctional comonomers and
d₄) from 0.2 to 3% by weight of a regulator,
with the proviso that the ratio of the amounts of vinylaromatic monomers c₁:b₁ is from 1.3:1 to 1.9:1 and the sum of the components A to D is 100% by weight.

2. A process for the preparation of an emulsion graft copolymer, wherein
A) from 5 to 18% by weight of a monomer mixture comprising
a₁) from 85 to 99% by weight of methyl methacrylate,
a₂) from 1 to 15% by weight of C₁-C₈-alkyl acrylate,
a₃) from 0 to 2% by weight of allyl methacrylate and
a₄) from 0 to 3% by weight of further di- or polyfunctional comonomers,
B) from 25 to 35% by weight of a monomer mixture comprising
b₁) from 10 to 25% by weight of vinylaromatic monomers,
b₂) from 75 to 90% by weight of C₁-C₂₀-alkyl acrylate and
b₃) from 0 to 3% by weight of allyl methacrylate,
C) from 30 to 40% by weight of a monomer mixture comprising
c₁) from 15 to 27% by weight of vinylaromatic monomers,
c₂) from 73 to 85% by weight of C₁-C₂₀-alkyl acrylate and
c₃) from 0 to 3% by weight of allyl methacrylate and
D) from 15 to 30% by weight of a monomer mixture comprising
d₁) from 85 to 96% by weight of methyl methacrylate,
d₂) from 3.8 to 10% by weight of C₁-C₈-alkyl acrylate,
d₃) from 0 to 2% by weight of further di- or polyfunctional comonomers and
d₄) from 0.2 to 3% by weight of a regulator,
are polymerized in succession, wherein the sum of the components A to D is 100% by weight and component C is always present in an excess compared to component B and the ratio of the amounts of vinylaromatic monomers c₁:b₁ is from 1.3:1 to 2.0:1.

3. A process as claimed in claim 2, wherein the ratio of the amounts of vinylaromatic monomers c₁ to b₁ is in the range of from 1.4:1 to 1.9:1.

4. Use of an emulsion graft copolymer as claimed in claim 1 as an additive for increasing the impact resistance of thermoplastic materials.

5. A thermoplastic material containing from 10 to 60% by weight of an emulsion graft copolymer as claimed in claim 1.

6. A thermoplastic material as claimed in claim 5, containing
I) from 10 to 60% by weight of an emulsion graft copolymer as claimed in claim 1 and
II) from 40 to 90% by weight of a polymer containing
II₁) from 80 to 99% by weight of methyl methacrylate,
II₂) from 1 to 20% by weight of C₁-C₈-alkyl acrylate and
II₃) from 0 to 20% by weight of further comonomers and
III)from 0 to 20% by weight of additives or processing assistants or of mixtures thereof.

7. A molding, film or coating comprising a thermoplastic material as claimed in claim 5 or 6.

## Revendications

1. Copolymères greffés en émulsion, formés de
A) 5 à 18 % en poids d'un premier étage constitué de
a₁) 85 à 99 % en poids de méthacrylate de méthyle
a₂) 1 à 15 % en poids d'ester alkylique en C₁ à C₈ d'acide acrylique
a₃) 0 à 2 % en poids de méthacrylate d'allyle
a₄) 0 à 3 % en poids de comonomères di- ou polyfonctionnels supplémentaires
B) 25 à 35 % en poids d'un deuxième étage constitué de
b₁) 10 à 25 % en poids de monomères vinylaromatiques
b₂) 75 à 90 % en poids d'ester alkylique en C₁ à C₂₀ d'acide acrylique
b₃) 0 à 3 % en poids de méthacrylate d'allyle
C) 30 à 40 % en poids d'un troisième étage constitué de
c₁) 15 à 27 % en poids de monomères vinylaromatiques
c₂) 73 à 85 % en poids d'ester alkylique en C₁ à C₂₀ d'acide acrylique
c₃) 0 à 3 % en poids de méthacrylate d'allyle
D) 15 à 30 % en poids d'un quatrième étage constitué de
d₁) 85 à 96 % en poids de méthacrylate de méthyle
d₂) 3,8 à 10 % en poids d'ester alkylique en C₁ à C₈ d'acide acrylique
d₃) 0 à 2 % en poids de comonomères di- ou polyfonctionnels supplémentaires
d₄) 0,2 à 3 % en poids d'un régulateur
sous condition que le rapport des quantités de monomères vinylaromatiques c₁:b₁ vaut 1,3 à 1,9 : 1 et que la somme des composants A à D vaut 100 % en poids.

2. Procédé de préparation de copolymères greffés en émulsion, caractérisé en ce qu'on ajoute successivement
A) 5 à 18 % en poids d'un mélange de monomères constitué de
a₁) 85 à 99 % en poids de méthacrylate de méthyle
a₂) 1 à 15 % en poids d'ester alkylique en C₁ à C₈ d'acide acrylique
a₃) 0 à 2 % en poids de méthacrylate d'allyle
a₄) 0 à 3 % en poids de comonomères di- ou polyfonctionnels supplémentaires
B) 25 à 35 % en poids d'un mélange de monomères constitué de
b₁) 10 à 25 % en poids de monomères vinylaromatiques
b₂) 75 à 90 % en poids d'ester alkylique en C₁ à C₂₀ d'acide acrylique
b₃) 0 à 3 % en poids de méthacrylate d'allyle
C) 30 à 40 % en poids d'un mélange de monomères constitué de
c₁) 15 à 27 % en poids de monomères vinylaromatiques
c₂) 73 à 85 % en poids d'ester alkylique en C₁ à C₂₀ d'acide acrylique
c₃) 0 à 3 % en poids de méthacrylate d'allyle
D) 15 à 30 % en poids d'un mélange de monomères constitué de
d₁) 85 à 96 % en poids de méthacrylate de méthyle
d₂) 3,8 à 10 % en poids d'ester alkylique en C₁ à C₈ d'acide acrylique
d₃) 0 à 2 % en poids de comonomères di- ou polyfonctionnels supplémentaires
d₄) 0,2 à 3 % en poids d'un régulateur
à la polymérisation, caractérisé en ce que la somme des composants A à D vaut 100 % en poids et en ce que le composant C est toujours en excès par rapport au composant B et en ce que le rapport des quantités de monomères vinylaromatiques c₁:b₁ vaut 1,3 à 2,0:1.

3. Procédé selon la revendication 2, caractérisé en ce que le rapport des quantités de monomères vinylaromatiques c₁ à b₁ se situe dans la gamme de 1,4 : 1 à 1,9 : 1.

4. Utilisation des copolymères greffés en émulsion selon la revendication 1, à titre d'additif pour augmenter la résistance aux chocs de masses thermoplastiques.

5. Masses thermoplastiques contenant 10 à 60 % en poids de copolymères greffés en émulsion selon la revendication 1.

6. Masses thermoplastiques selon la revendication 5, contenant
I) 10 à 60 % en poids de copolymères greffés en émulsion selon la revendication 1 et
II) 40 à 90 % en poids d'un polymère, contenant
II₁) 80 à 99 % en poids de méthacrylate de méthyle
II₂) 1 à 20 % en poids d'ester alkylique en C₁ à C₈ d'acide acrylique
III₃) 0 à 20 % en poids de comonomères supplémentaires
III) 0 à 20 % en poids d'additifs ou d'adjuvants de mise en oeuvre ou de leurs mélanges.

7. Objets moulés, feuilles ou revêtements, contenant des masses thermoplastiques selon la revendication 5 ou 6.
